# EUROPEAN PATENT SPECIFICATION

(11) **EP 0 558 843 B1**
(45) Date of publication and mention of the grant of the patent: **06.03.1996**
(21) Application number: 92301929.3
(22) Date of filing: 06.03.1992
(51) Int. Cl.: G01H 1/00, G01H 9/00, G01B 11/14

(54) **Device for measuring vibration of a rotating blade**
Vorrichtung zur Vibrationsmessung einer Turbinenschauffel
Dispositif pour la mesure de vibrations d'un aube de turbine

(43) Date of publication of application: 08.09.1993
(73) Proprietor: ISHIKAWAJIMA-HARIMA JUKOGYO KABUSHIKI KAISHA, Tokyo-to 100 (JP)
(72) Inventor: Iinuma, Hideyasu, Iruma-shi, Saitama-ken 358 (JP); Wakatsuki, Takashi, Nerima-ku, Tokyo 177 (JP); Minagawa, Nobuya, Ome-shi, Tokyo 198 (JP)
(74) Representative: Jennings, Nigel Robin

(56) References cited:
- EP-A- 0 119 679
- EP-A- 0 342 979
- GB-A- 2 066 449

## Description

### DEVICE FOR MEASURING VIBRATION OF A ROTATING BLADE

The present invention relates to a device for measuring the vibration of rotating blades and is particularly concerned with such a device for use with a blade of a gas turbine or like machine whose blades become very hot in operation.

Hitherto, the vibrations of a rotating blade of a turbine or the like during its operation have been measured by the attachment of a strain gauge to the blade itself. The electric signals produced by the strain gauge are transmitted to a stationary portion of the device by transmission means such as a slip ring, a rotary transformer or a microtransmitter and the signals are then displayed or recorded.

Strain gauges, however, have an upper limit of their operating temperature of approximately 800°C, so that they cannot be used for measuring vibrations of a rotating blade of a gas turbine or the like whose temperature may reach a level as high as 1,300°.

Even in a steam turbine or the like where a strain gauge can be used because of the fact that the turbine temperature is below the upper limit of its operating temperature, installation of the signal transmitting means requires considerable reconstruction of stationary and rotating portions of the turbine and the attachment of the strain gauge to the blade will cause changes in its aerodynamic and vibration characteristics, resulting in difficulties in the accurate measurement of the inherent vibration characteristics of the rotating blade itself.

To avoid some of these difficulties when monitoring in the demanding environment of a gas turbine engine running clearances between a turbine blade and a turbine casing, a device known from GB-A-2 066 449 projects light from an end of an optical fibre through a lens system onto a blade tip. Reflected light is passed back through the lens system and re-projected onto photoelectric cells fed by optical fibres disposed symmetrically about the projecting optical fibre. Signals from the cells are combined to produce a measure of the shape of the image on a blade tip, and hence of clearances.

It is the object of the present invention to overcome the above disadvantages and to provide an improved device for measuring the vibration of a rotating blade which does not use a strain gauge attached to the rotating blade and is capable of measuring the vibrations of a rotating blade operating at a high temperature without causing any change in the vibration characteristics of the blade.

According to the present invention a device for use in measuring the vibration of a rotating blade of a gas turbine or like machine is characterised by a probe including an outer casing accommodating a light-projecting optical fibre, a light-receiving optical fibre, a quartz glass lens at the outlet end of the light-projecting fibre and a protective glass of quartz glass at the tip of the probe, coolant channels extending through the outer casing. Thus the device in accordance with the present invention permits a light beam, preferably a laser beam, to be projected from the end of the light-projecting optical fibre onto the tips of the turbine blades and this beam is reflected back into the light-receiving optical fibre and the pulsating beam may then be analysed to determine the degree or nature of the oscillation being performed by the blades. The optical fibres are protected from damage by the quartz glass and the probe is maintained at an acceptable temperature by circulating coolant through the cooling channels.

It is preferred that the light-projecting and light-receiving optical fibres are coaxially disposed.

The present invention also embraces a gas turbine or like machine including such a device and in this event it is preferred that the gas turbine has a casing in which an air channel is defined, the tip of the probe being directed towards the blades of the gas turbine and being situated in the flow of air through the air channel. It is preferred that there is a hole in the inner surface of the air channel through which the light beam projected from the light-projecting optical fibre may pass onto the turbine blades and through which air flows from the air passage into the interior of the turbine whereby the tip of the probe is inherently surrounded by a cooling air flow.

Further features and details of the invention will be apparent from the following description of one specific embodiment which is given by way of example only with reference to the accompanying drawings, in which:-
Figure 1 is an enlarged vertical sectional view of measuring device in the form of a probe in accordance with the present invention;
Figure 2 is a diagrammatic vertical side sectional view of a gas turbine to which the probe of Figure 1 is attached;
Figure 3 is a sectional view on the line III-III in Figure 1;
Figure 4 is a sectional view on the line IV-IV in Figure 1; and
Figure 5 is a diagrammatic perspective view illustrating the overall construction of measuring apparatus including the measuring device of Figure 1.

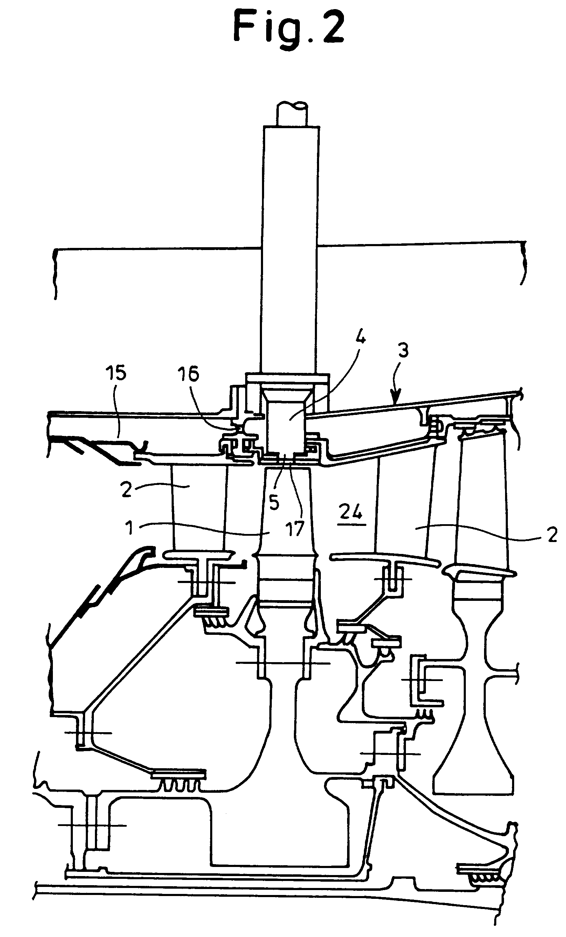

The gas turbine illustrated in Figure 2 includes a blades 1, which rotate, in use, and a stationary nozzle 2. The turbine casing 3 is provided with probes 4 which will be described below and have a respective tip end 5 directed toward the tips of the rotating blades 1.

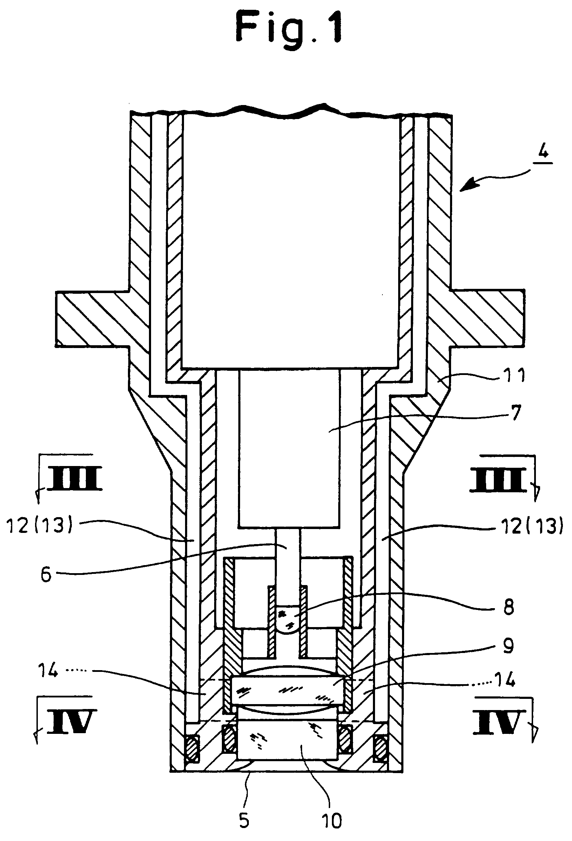

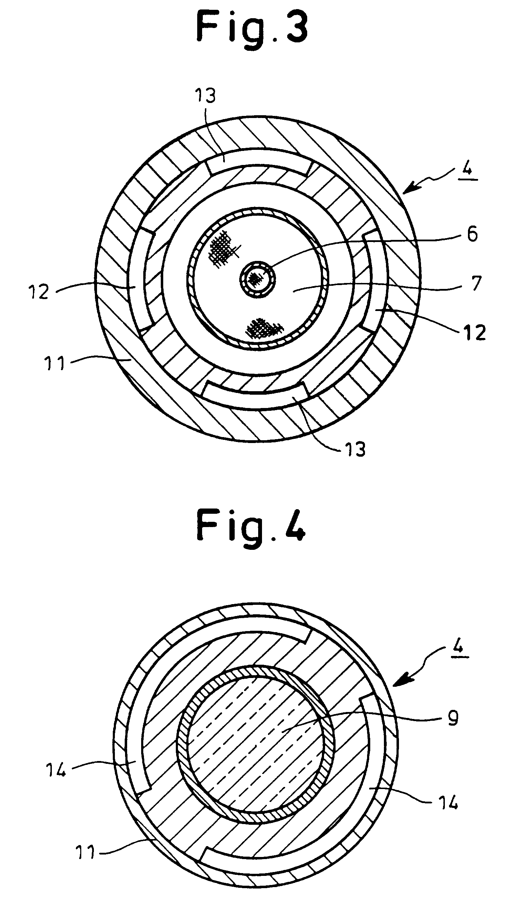

As shown in Figures 1 and 3, each probe 4 comprises a central light-projecting optical fibre 6 and a light-receiving optical fibre 7 concentrically surrounding it. The optical fibre 6 has a small-diameter lens 8 made of quartz glass mounted at its outlet end. A large-diameter lens 9 made of quartz glass is mounted at some distance in front of the lens 8 and installed at a point in front of the lens 9, i.e. still further in front of the lens 8, is a protective plate or block 10 made of quartz glass. The optical fibres 6 and 7, the lenses 8 and 9 and the protective glass 10 are accommodated in an outer casing 11.

Coolant channels 12 and 13 extend through the casing 11, alternating in the peripheral direction as shown in Figure 3, and are connected in pairs at their tips by respective connecting channels 14 (see Figures 1 and 4), so that the coolant supplied through one coolant channel 12 is passed through the associated channel 14 and is fed back in reflux through the other coolant channel 13, thus cooling the probe 4.

As shown in Figure 2, an air channel 15 extends through the casing 3 of the gas turbine. The gas turbine is provided with a compressor for producing compressed air for the combustion of fuel and part of the compressed air produced in this compressor is supplied through the air channel 15 and cools the casing 3. Part of the compressed air is passed through a hole 16 and is blown around the tip 5 of the probe 4 where it cools the probe 4 and prevents the protective glass 10 from being stained. Then, it is led through a hole 17 into the interior 24 of the gas turbine.

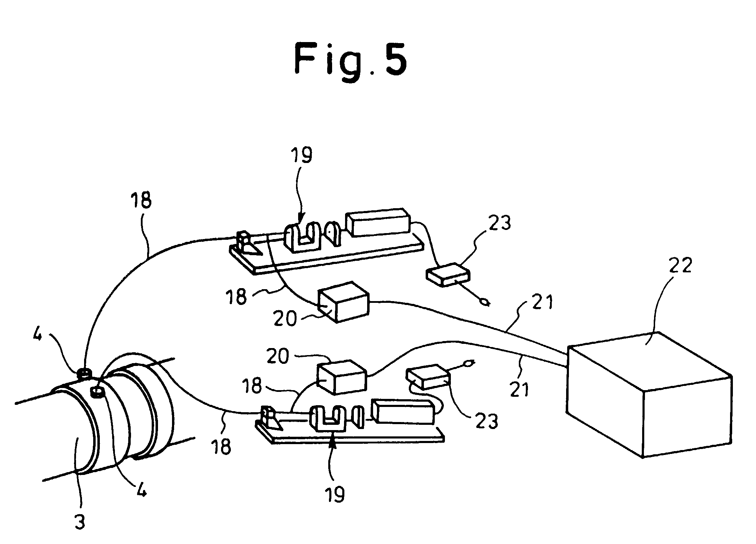

The probes 4 are installed at a plurality of locations on the outer surface of the casing 3 of the gas turbine as shown in Figure 5. Each probe 4 is connected to a laser beam generator and lens system 19 through an optical fibre unit 18 comprising the concentrically arranged light-projecting and light-receiving optical fibres 6 and 7 (see Figures 1 and 3). The laser lens system 19 is powered by a power source 23 and is connected to the light-projecting fibre 6. The light-receiving fibre 7 is connected to a photoelectric transducer 20 which in turn is connected through a cable 21 to an analyser 22.

A laser beam produced by the laser lens system 19 is passed through the light-projecting optical fibre 6 in the probe 4, the lenses 8 and 9 and the protective glass 10 (see Figure 1). Then, it passes from the tip 5 of the probe 4 through the hole 17, as shown in Figure 2, onto the tips of the rotating blades 1, on which it is focused by the lenses 8 and 9. The laser beam is reflected from the tips of the rotating blades and is returned through the hole 17, the protective glass 10 and the lens 9 which directs the beam parallel to the optical axis into the light-receiving optical fibre 7, so that the laser beam reaches the photoelectric transducer 20, as shown in Figure 5, where it is converted into pulsing electrical signals which are fed to the analyser 22. When any of the rotating blades 1 is vibrating, a minute deviation will occur in the timing of the reflected pulsing laser beam due to deformation at the tip of the rotating blade 1. The nature and degree of the vibrations of the rotating blade can be measured by analysing this deviation.

In the measuring operation, the compressed air in the air channel 15 is blown through the hole 16 around the tip 5 of the probe 4 and through hole 17 into the inside 24 of the gas turbine to cool the tip 5 which is also cooled by the coolant flowing in reflux through the coolant channels 12 and 13. The compressed air also serves to prevent the protective glass 10 at the tip 5 of the probe 4 from being discoloured.

Thus, by using the device according to the present invention, vibrations of a rotating blade can be measured without using a strain gauge on the blade whereby no change in the vibration characteristics of the blade is caused by the measurement. A simple conversion operation involving merely mounting probes on the casing of the gas turbine is all that is required.

The present invention results in the probes being protected from damage which would otherwise be caused due to high temperature, by means of the lenses and protective glass which are made of highly heat-resistant quartz glass and by means of liquid-cooling by coolant flowing through the coolant channels and air-cooling by the compressed air blown through the air channel into the inside of the gas turbine, thereby enabling measurement of the level of vibrations of the rotating blades in the higher temperature region of the turbine.

## Claims

1. A device for use in measuring the vibration of a rotating blade of a gas turbine or like machine comprising a probe (4) including an outer casing (11) accommodating a light-projecting optical fibre (6), a light-receiving optical fibre (7), a quartz glass lens (8) at the outlet end of the light-projecting fibre (6) and a protective glass (10) of quartz glass at the tip (5) of the probe (4), coolant channels (12,13,14) extending through the outer casing (11).

2. A device as claimed in claim 1, wherein the light-projecting and light-receiving optical fibres (6,7) are coaxially disposed.

3. A device as claimed in claim 1 or claim 2 which, in use, is installed on a gas turbine or like machine having a casing (3) in which an air channel (15) is defined, the tip (5) of the probe (4) being directed towards the blades (1) of the gas turbine or like machine and being situated in the flow of air through the air channel (15).

4. Apparatus for measuring the vibration of a rotating blade of a gas turbine or like machine comprising a device as claimed in any one of claims 1 to 3, a laser beam generator (19) arranged to direct a laser beam along the light-transmitting optical fibre (6), a photoelectric transducer (20) arranged to receive the laser beam reflected from a rotating blade (1) into the light-receiving optical fibre (7) and an analyser (22) arranged to analyse the signals produced by the transducer and to produce an output indicative of the vibration of the rotating blade (1).

## Patentansprüche

1. Vorrichtung für den Gebrauch beim Messen der Schwingungen einer rotierenden Schaufel einer Gasturbine oder einer ähnlichen Maschine, mit einem Fühler (4), der ein äußeres Gehäuse (11) enthält, das eine lichtprojizierende Lichtleitfaser (6), eine lichtempfangende Lichtleitfaser (7), eine Quarzglaslinse (8) am Auslaßende der lichtprojizierenden Faser (6) sowie an der Spitze (5) des Fühlers (4) ein Schutzglas (10) aus Quarzglas enthält, wobei durch das äußere Gehäuse (11) Kühlmittelkanäle (12, 13, 14) verlaufen.

2. Vorrichtung nach Anspruch 1, bei der die lichtprojizierende und die lichtempfangende Lichtleitfaser (6, 7) koaxial angeordnet sind.

3. Vorrichtung nach Anspruch 1 oder Anspruch 2, die an einer Gasturbine oder einer ähnlichen Maschine angebracht ist, die ein Gehäuse (3) besitzt, in dem ein Luftkanal (15) definiert ist, wobei die Spitze (5) des Fühlers (4) zu den Schaufeln (1) der Gasturbine oder der ähnlichen Maschine gerichtet ist und sich in der Luftströmung durch den Luftkanal (15) befindet.

4. Gerät zum Messen der Schwingungen einer rotierenden Schaufel einer Gasturbine oder einer ähnlichen Maschine, mit einer Vorrichtung nach irgendeinem der Ansprüche 1 bis 3, einem Laserstrahlgenerator (19), der so beschaffen ist, daß er einen Laserstrahl entlang der lichtübertragenden Lichtleitfaser lenkt, einem photoelektrischen Wandler (20), der so beschaffen ist, daß er den von einer rotierenden Schaufel (1) in die lichtempfangende Lichtleitfaser (7) reflektierten Laserstrahl empfängt, und einem Analysator (22), der so beschaffen ist, daß er die vom Wandler erzeugten Signale analysiert und einen Ausgang erzeugt, der die Schwingungen der rotierenden Schaufel (1) angibt.

## Revendications

1. Dispositif pour mesurer les vibrations d'une aube de turbine d'une turbine à gaz ou d'un appareil analogue comprenant un capteur (4) incluant un boîtier externe (11) recevant une fibre optique projetant de la lumière (6), une fibre optique recevant de la lumière (7), une lentille en verre quartzeux (8) à l'extrémité de sortie de la fibre optique projetant de la lumière (6) et un verre de protection (10) en verre quartzeux à la pointe (5) du capteur (4), des canaux de réfrigération (12, 13, 14) s'étendant à travers le boîtier externe (11).

2. Dispositif selon la revendication 1, dans lequel les fibres optiques projetant de la lumière et recevant de la lumière (6, 7) sont disposées de manière coaxiale.

3. Dispositif selon la revendication 1 ou 2 qui, en fonctionnement, est installé sur une turbine à gaz ou un appareil analogue présentant un boîtier (3) dans lequel un canal d'aération (15) est défini, la pointe (5) du capteur (4) étant dirigée vers les aubes (1) de la turbine à gaz ou de l'appareil analogue et étant disposée dans l'écoulement d'air à travers le canal d'aération (15).

4. Appareil pour mesurer les vibrations d'une aube de turbine d'une turbine à gaz ou d'un appareil analogue, comprenant un dispositif selon l'une des revendications 1 à 3, un générateur de faisceau laser (19) disposé de manière à diriger un faisceau laser le long d'une fibre optique transmettant la lumière (6), un transducteur photoélectrique (20) disposé de manière à recevoir le faisceau laser réfléchi depuis une aube (1) de turbine dans la fibre recevant de la lumière (7) et un dispositif d'analyse (22) destiné à analyser les signaux produits par le transducteur et à produire une sortie indiquant les vibrations de l'aube (1) de turbine.
